# EUROPEAN PATENT APPLICATION

(11) **EP 2 031 238 A2**
(43) Date of publication of application: **04.03.2009**
(21) Application number: 08162576.6
(22) Date of filing: 19.08.2008
(51) Int. Cl.: F02M 69/46, F02M 69/54

(54) **Fuel pressure regulator for vehicle**

(30) Priority: 30.08.2007 US 897543
(71) Applicant: Delphi Technologies, Inc., Troy, Michigan 48007 (US)
(72) Inventor: Almaraz, Jose L., 32505 Juarez, Chihuahua (MX); McGrath, Dennis Paul, Ortonville, MI 48462 (US)
(74) Representative: Denton, Michael John

(57) **Abstract**

In one embodiment, a fuel pressure regulator includes a housing defining a fuel inlet and a fuel outlet, and a ball in the housing is movable between a closed configuration, wherein fluid communication between the inlet and outlet is blocked, and an open configuration, wherein fluid communication between the inlet and outlet is not blocked. Fuel pressure urges the ball toward the open configuration. A spring in the housing is engaged with the ball to urge the ball toward the closed configuration. Also, a ball holder is engaged with the ball and spring and is oriented to receive fluid pressure from the inlet when the ball is moved away from the closed configuration. Fluid pressure from the inlet acts directly against the ball holder as well as against the ball to assist moving the ball toward the open configuration.

## Description

### Technical Field

The present invention relates generally to pressure regulators, and more particularly to fuel pressure regulators for vehicles.

### Background of the Invention

Fuel injection systems for automotive engines commonly include electromagnetic fuel injectors that deliver fuel from a fuel rail to the engine inlet manifold adjacent the engine combustion chamber inlet ports. Such fuel injection systems ordinarily include a fuel pressure regulator to control the pressure of the fuel in the rail. Fuel pressure regulators may also be used in carbureted systems.

With particular respect to fuel injected systems, the pressure in the fuel rail is usually controlled to maintain a constant pressure difference across the injector (i.e. from the pressure in the fuel rail to the pressure in the manifold). The fuel pressure regulator, which may be connected directly to the fuel rail or incorporated in a pump module at the outlet of the fuel pump, recirculates excess fuel back to the fuel tank as necessary to maintain a constant pressure at the inlet to the injectors.

As understood herein, it is preferable to maintain pressure within a relatively small pressure range, to optimize injector performance. As way to measure how close a regulator maintains pressure to a desired pressure is "gain", with many automotive applications requiring a pressure regulator "gain" of no more than one-half kilo Pascal per gram per second (≤0.50 kPa/g/s). As further understood herein, it is preferable to provide a regulator for this purpose which is inexpensive, and further which does not result in excessive pressure pulsation and excessive noise due to, e.g., valve chatter or cavitation.

### Summary of the invention

In one embodiment, a fuel pressure regulator includes a housing defining a fuel inlet and a fuel outlet, and a ball in the housing is movable between a closed configuration, wherein fluid communication between the inlet and outlet is blocked, and an open configuration, wherein fluid communication between the inlet and outlet is not blocked. Fuel pressure urges the ball toward the open configuration. A spring in the housing is engaged with the ball to urge the ball toward the closed configuration. Also, a ball holder is engaged with the ball and spring and is oriented to receive fluid pressure from the inlet when the ball is moved away from the closed configuration. Fluid pressure from the inlet acts directly against the ball holder as well as against the ball to assist moving the ball toward the open configuration.

The non-limiting fuel pressure regulator has a gain of no more than thirty five hundredths kiloPascals per gram per second (0.35 kPa/g/s). In other implementations particularly not incorporating a spring plate, the gain may be higher.

In some embodiments the inlet defines a valve seat, and the ball is urged against the valve seat in the closed configuration. The ball can be press-fit into the ball holder such that rotational motion and lateral motion of the ball during ball movement is substantially prevented, i.e., the ball substantially does not move relative to the ball holder.

As set forth further below, in non-limiting embodiments the ball holder includes an assist wing extending substantially radially away from the ball and oriented substantially laterally to the inlet. Also, the ball holder can include a spring engagement wing oriented substantially laterally to the inlet and engaging the spring. The ball receptacle defines a longitudinal axis parallel to the direction of ball motion when the ball moves between the closed and open configurations, and the assist wing may be established by a disk-shaped flange extending laterally away from ball receptacle and circumscribing the receptacle.

In another aspect, a fuel pressure regulator for supplying fuel at a substantially constant pressure has a housing with a fuel inlet and a fuel outlet. The housing defines a seating surface. A valve element is movably disposed within the housing and is movable between an open position permitting fuel flow through the housing, and a closed position preventing fuel flow through the housing. The valve element includes a roundular seating member engageable with the seating surface in the closed position and a guide member receiving fluid pressure when the roundular member is distanced from the seating surface to aid in urging the roundular member toward the open position.

In yet another aspect, a fuel system has a fuel pump, one or more fuel injectors receiving fuel from the pump, and a fuel pressure regulator communicating with the pump to regulate pressure of fluid provided to the injector. The fuel pressure regulator includes means for closing the fuel pressure regulator. The means for closing is urged by fluid pressure to an open position. The fuel pressure regulator also has means for urging the means for closing toward a closed configuration. Means are provided that are operable only when the means for closing is not in the closed position for receiving fluid pressure and by dint of the fluid pressure to assist in urging the means for closing toward the open position.

The details of the present invention, both as to its structure and operation, can best be understood in reference to the accompanying drawings, in which like reference numerals refer to like parts, and in which:

### Brief description of the drawings

Figure 1 is a block diagram of a non-limiting fuel system in which the present fuel pressure regulator may be used;

Figure 2 is a perspective view of a non-limiting implementation of the fuel pressure regulator from the fuel inlet end;

Figure 3 is a perspective view of a non-limiting implementation of the fuel pressure regulator from the fuel outlet end;

Figure 4 is a cross-sectional view as seen along the line 4-4 in Figure 2, showing the fuel pressure regulator in the closed configuration; and

Figure 5 is a cross-sectional view as would be seen along the line 4-4 in Figure 2, showing the fuel pressure regulator in the open configuration.

### Description of the preferred embodiment

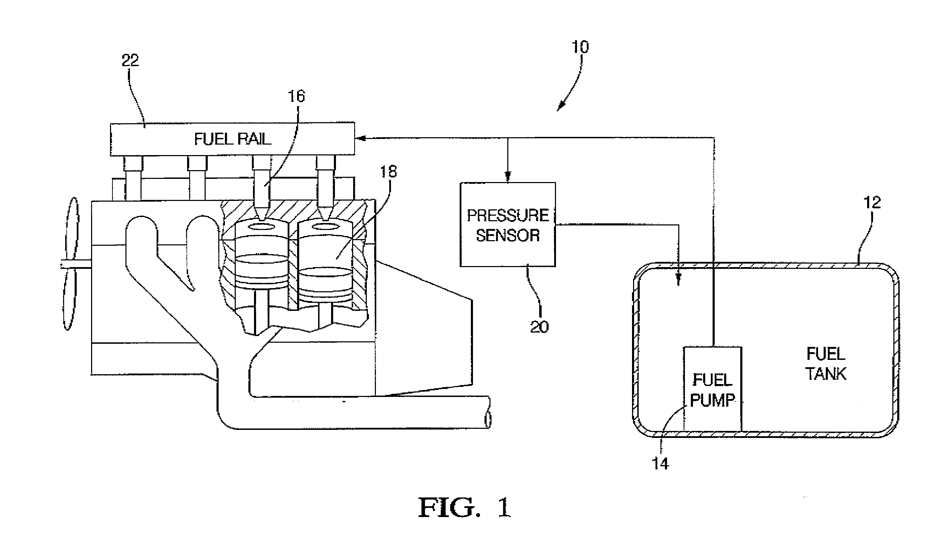

Referring initially to Figure 1, a system is shown, generally designated 10, which includes a fuel tank 12 and a fuel pump 14 disposable inside or outside the tank to pump fuel to one or more fuel injectors 16. Each injector 16 ports fuel to a respective engine cylinder 18. A fuel pressure regulator 20 which may be connected to a fuel rail inlet 22 to the injectors 16 or to the outlet of the pump 14 (and housed therewith in a single pump module) establishes a substantially constant pressure to the inlet of the injectors 16 by opening to recirculate fuel back to the tank 12 when fuel inlet pressure actuates the fuel pressure regulator.

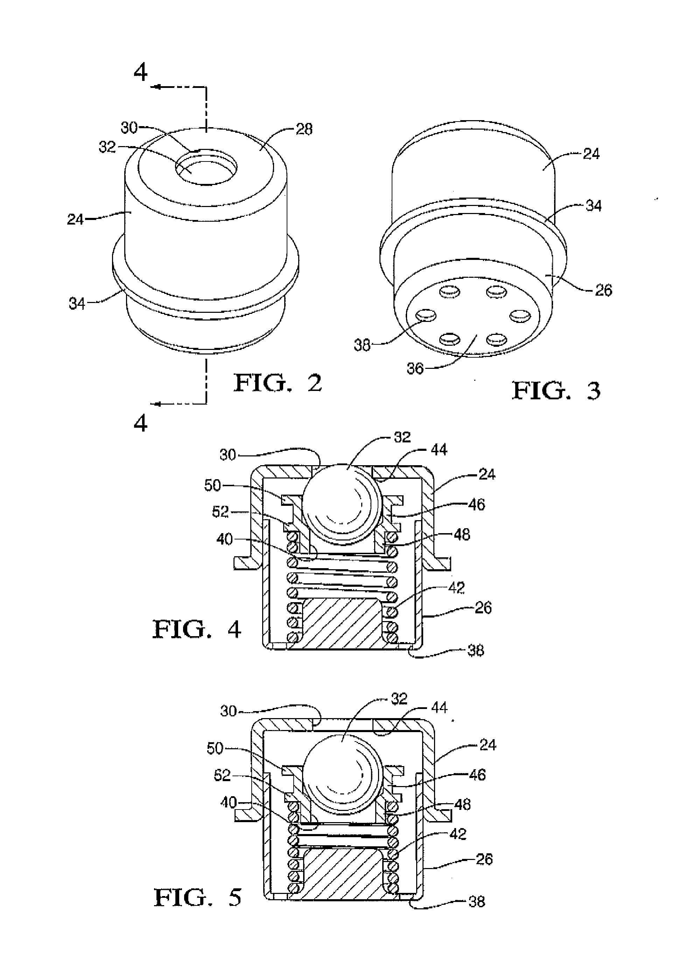

Figures 2 and 3 show that in non-limiting implementations the fuel pressure regulator 20 includes a two-piece housing in which an inlet cylinder 24 fits snugly onto an outlet cylinder 26. The inlet cylinder 24 has an inlet base 28 centrally formed with an inlet 30, and a ball 32 is juxtaposed with the inlet 30 as shown. A skirt 34 circumscribes the base of the inlet cylinder 24 that is opposite the inlet base 28. In contrast, the outlet cylinder 26 has an outlet base 36 formed with one or more outlet holes 38. Six outlet holes 38 are shown in Figure 3. In other embodiments, only a single central outlet hole may be provided, or three outlets holes radially spaced from each other by one hundred twenty degrees, or some other number of outlet holes may be used.

Details of a non-limiting implementation of the fuel pressure regulator 20 are shown in Figures 4 and 5. The ball 32 is engaged with a ball holder 40, and the ball holder 40 in turn is engaged with a spring 42, which urges the ball holder 40 with ball 32 toward a seat 44 formed by the inlet 30. In non-limiting embodiments the ball 32 does not move relative to the ball holder 40, neither rotating nor laterally moving with respect to the longitudinal axis of motion when the ball holder 40 with ball 32 move between the closed configuration shown in Figure 4 and the open configuration shown in Figure 5.

In specific non-limiting implementations the ball 32 is press-fit into a cylindrical ball receptacle of the ball holder 40. In the embodiment shown the cylindrical ball receptacle may include an upper, radially wider segment 46 and a lower, radially narrower segment 48 (Figure 4). Circumscribing the open top end of the upper segment 46 is a disk-shaped flange 50 that, in the non-limiting embodiment shown, establishes one or more assist wings. Also, a spring engagement flange 52 may circumscribe the receptacle as shown generally at the junction of the upper and lower segments 46, 48. The spring engagement flange 52 has a diameter that is larger than the diameter of the spring 42, so that it rests on the top coil of the spring. Both the assist wing established by the flange 50 and the spring engagement flange 52 extend substantially radially away from the ball holder 40 and are oriented substantially laterally to the inlet 30, i.e., the flat top surfaces of the flanges 50, 52 are oriented at more or less right angles to the direction at which fluid enters the inlet 30. Put differently, the flat top surfaces of the flanges 50, 52 are oriented at more or less right angles to the axis of motion of the ball 32 with ball holder 40 when moving between the open and closed configurations.

It may now be appreciated in cross-reference to Figures 4 and 5 that with the ball 32 in the closed position shown in Figure 4, i.e., seated against the seat 44 to prevent fuel from flowing from the inlet 30 to the outlet holes 38, the spring 42 urges the ball 32 against the seat 44. Fluid pressure at the inlet 30, in contrast, urges the ball 32 away from the seat 44. When this fluid pressure becomes sufficiently large, the ball 32 is unseated from the seat 44, permitting fluid pressure from the inlet 30 to act directly against (i.e., with no intervening pressure-transmitting structure) the ball holder 40 as well as against the ball 32 to assist moving the ball 32 toward the open configuration. With this cooperation of structure, the fuel pressure regulator 20 has a gain of no more than thirty five hundredths kiloPascals per gram per second (0.35 kPa/g/s). The spring force and geometry of the regulator 20 are established as appropriate for the desired pressure at which the ball 32 is unseated.

While the particular FUEL PRESSURE REGULATOR FOR VEHICLE is herein shown and described in detail, it is to be understood that the subject matter which is encompassed by the present invention is limited only by the claims.

## Claims

1. A fuel pressure regulator comprising:
a housing defining a fuel inlet and a fuel outlet;
a ball in the housing and movable between a closed configuration, wherein fluid communication between the inlet and outlet is blocked, and an open configuration, wherein fluid communication between the inlet and outlet is not blocked, fuel pressure urging the ball toward the open configuration;
a spring in the housing and engaged with the ball to urge the ball toward the closed configuration; and
a ball holder engaged with the ball and spring and oriented to receive fluid pressure from the inlet when the ball is moved away from the closed configuration, fluid pressure from the inlet acting directly against the ball holder as well as the ball to assist moving the ball toward the open configuration.

2. The fuel pressure regulator of Claim 1, wherein the fuel pressure regulator has a gain of no more than thirty five hundredths kiloPascals per gram per second (0.35 kPa/g/s).

3. The fuel pressure regulator of Claim 1, wherein the inlet defines a valve seat, the ball being urged against the valve seat in the closed configuration.

4. The fuel pressure regulator of Claim 1, wherein the ball is press-fit into the ball holder such that rotational motion and lateral motion of the ball during ball movement is substantially prevented.

5. The fuel pressure regulator of Claim 1, wherein the ball does not move relative to the ball holder.

6. The fuel pressure regulator of Claim 1, wherein the ball holder further comprises:
at least one assist wing extending substantially radially away from the ball and oriented substantially laterally to the inlet.

7. The fuel pressure regulator of Claim 6, wherein the ball holder further comprises:
at least one spring engagement wing oriented substantially laterally to the inlet and engaging the spring.

8. The fuel pressure regulator of Claim 6, wherein the ball is press fit into a ball receptacle of the ball holder, the ball receptacle defining a longitudinal axis parallel to the direction of ball motion when the ball moves between the closed and open configurations, the assist wing being established by a disk-shaped flange extending laterally away from ball receptacle.

9. A fuel pressure regulator for supplying fuel at a substantially constant pressure, comprising:
a housing having a fuel inlet and a fuel outlet, and defining a seating surface; and
a valve element movably disposed within the housing and movable between an open position permitting fuel flow through the housing, and a closed position preventing fuel flow through the housing, the valve element including a roundular seating member engageable with the seating surface in the closed position and a guide member receiving fluid pressure when the roundular member is distanced from the seating surface to aid in urging the roundular member toward the open position.

10. The fuel pressure regulator of Claim 9, wherein the roundular member is ball and the guide element is a ball holder having a ball receptacle into which the ball is press-fit.

11. The fuel pressure regulator of Claim 10, wherein the fuel pressure regulator has a gain of no more than thirty five hundredths kiloPascals per gram per second (0.35 kPa/g/s).

12. The fuel pressure regulator of Claim 10, wherein the inlet defines the seating surface, the ball being urged by a spring toward the seating surface.

13. The fuel pressure regulator of Claim 10, wherein the ball is press-fit into the ball holder such that rotational motion and lateral motion of the ball during ball movement is substantially prevented.

14. The fuel pressure regulator of Claim 10, wherein the ball holder further comprises:
at least one assist wing extending substantially radially away from the ball and oriented substantially laterally to the inlet, the assist wing being established by a disk-shaped flange extending laterally away from ball receptacle.

15. The fuel pressure regulator of Claim 12, wherein the ball holder further comprises:
at least one spring engagement wing oriented substantially laterally to the inlet and engaging the spring.

16. A fuel system, comprising:
at least one fuel pump;
at least one fuel injector receiving fuel from the pump;
a fuel pressure regulator communicating at least with the pump to regulate pressure of fluid provided to the injector, the fuel pressure regulator including:
means for closing the fuel pressure regulator, the means for closing being urged by fluid pressure to an open position;
means for urging the means for closing toward a closed configuration; and
means, operable only when the means for closing is not in the closed position, for receiving fluid pressure and by dint of the fluid pressure to assist in urging the means for closing toward the open position.

17. The fuel system of Claim 16, wherein the means for closing is a ball, the means for urging is a spring, and the means for receiving is a ball holder having a ball receptacle in which the ball is disposed.

18. The fuel system of Claim 16, wherein the fuel pressure regulator has a gain of no more than thirty five hundredths kiloPascals per gram per second (0.35 kPa/g/s).

19. The fuel system of Claim 17, wherein the ball is press-fit into the ball holder such that rotational motion and lateral motion of the ball during ball movement is substantially prevented.

20. The fuel system of Claim 17, wherein the ball holder further comprises:
at least one assist wing extending substantially radially away from the ball and oriented substantially laterally to the inlet, the assist wing circumscribing the ball holder; and
at least one spring engagement wing oriented substantially laterally to the inlet and engaging the spring.
